# EUROPEAN PATENT SPECIFICATION

(11) **EP 2 750 066 B1**
(45) Date of publication and mention of the grant of the patent: **31.08.2016**
(21) Application number: 13166544.0
(22) Date of filing: 03.05.2013
(51) Int. Cl.: G06F 21/55, G06F 21/56

(54) **System and method for detecting malware that interferes with a user interface**
System und Verfahren zur Erkennung von Malware, welche die Benutzerschnittstelle beeinträchtigt
Système et procédé de détection de maliciel qui interfère avec une interface utilisateur

(30) Priority: 25.12.2012 RU 2012156439; 29.03.2013 US 201313853468
(43) Date of publication of application: 02.07.2014
(73) Proprietor: AO Kaspersky Lab, Moscow 125212 (RU)
(72) Inventor: Tatarinov, Ivan I., 125212 Moscow (RU); Martynenko, Vladislav V., 125212 Moscow (RU); Monastyrsky, Alexey V., 125212 Moscow (RU); Pavlyushchik, Mikhail, 125212 Moscow (RU); Sapronov, Konstantin V., 125212 Moscow (RU); Slobodyanuk, Yuri G., 125212 Moscow (RU)
(74) Representative: Prock, Thomas

(56) References cited:
- US-A1- 2008 276 131
- US-A1- 2009 199 296
- US-A1- 2012 159 620

## Description

### Field of the Invention

The invention relates generally to information processing and security and, more particularly, to detecting malicious software that prevents normal user interaction with the operating system, such as ransomware.

### Background of the Invention

Malicious computer software, such as viruses, computer worms and trojans, present one of the most important computer security issues. It was calculated that annual financial losses of businesses caused by malicious software amount to tens of billions of dollars.

In recent years, a new type of malicious software, ransomware, has become widespread. The term *ransomware* as used herein refers to a family of malicious programs that block or impede user interaction with the operating system. Oftentimes, these programs demand the transfer of funds to the offenders in exchange for restoration of the computer's operability.
Technically, ransomware programs are a variant of trojan program, which infect their target computer systems using techniques such as attaching executable files to emails, or attacking a vulnerability in the network service to gain access to the target computer system.

In order to combat ransomware, antivirus companies have traditionally used basic signature detection methodology, which is based on the comparison of program codes with the signatures of known malicious programs stored in antivirus databases. Other approaches have used a combination of multiple proactive antivirus security technologies, the main goal of which, in contrast to the reactive (signature-based) technologies, is to prevent infection of the user's system by unknown malicious software. For example, heuristic analysis during code emulation has been combined with behavior analysis in order to prevent infection of the user's operating system with a ransomware program.

In the code emulation mode, the behavior of the operating system and of the central processor is simulated; therefore, the application in question cannot harm the user's operating system. Heuristic analysis based on the application code analysis determines the parts of the code which are responsible for malicious activity. A behavior analysis of the execution mode determines whether a program is malicious, based on its behavior.

The main advantage of these technologies consists in their ability to differentiate safe programs from malicious ones without using a professional virus analyst. One shortcoming, however, is that there is a certain intermediate zone between clearly malicious actions and acceptable actions. Moreover, the same actions or parts of a code can be malicious in a malicious program intended to extort money but useful in legitimate software. For example, running a full-screen application with a window in front of the other windows is used by ransomware programs to complicate the user's interaction with the operating system's graphical interface, but this is quite legitimate in computer games - for example, when a computer game application is run full-screen and does not respond to special key combinations like ALT-F4 or ALT-TAB.

This creates the possibility that antivirus technologies may be unable to detect an unknown ransomware program, which may result in a blockage of the user's interaction with the operating system, and, consequently, a blockage of the user's access to the antivirus product tools. Therefore, there is a need for quickly detecting the presence of an active ransomware program in the operating system, so that the antivirus software can alleviate the problem in a timely manner.

US2012/0159620 discloses a machine-implemented method for detecting scareware. The method includes the steps of accessing one or more landing pages to be evaluated, extracting one or more features from the landing pages and providing a classifier to compare the features extracted from the landing pages with features of known scareware and non-scareware pages. The classifier determines a likelihood that the landing page is scareware. If determined to be scareware, the landing page is removed from search result generated by a search engine. The features can be URLs, text, image interest points, image descriptors, a number of pop-ups generated, IP addresses, hostnames, domain names, text derived from images, images, metadata, identifiers of executables and combinations thereof.

US 2009/0199296 discloses techniques for detecting unauthorized use of computing systems. Unauthorized use can be detected based on patterns of use of the computing systems. Acceptable behavioral pattern data can be generated for a computing system by monitoring the use of a support system operating on the computing system. For example, a plurality of system support provider components of a support system can be monitored in order to generate the acceptable behavior pattern data in a form which effectively defines an acceptable pattern of use for the monitored system support provider components, thereby allowing detection of unauthorized use of a computing system by detecting any deviation from the acceptable pattern of use of the monitored system support provider components.

US 2008/0276131 discloses a system that accesses a log of events on more than one computing system and scans these logs in an effort to determine the likely cause of various items of interest, events, or problems. These items of interest often include improper or frustrating behavior of a computer system, but may also include delightful or beneficial behaviors for which a user, group of users, company, service, or help desk seeks a cause. Once the likely source of the item of interest is found, a test may be performed to confirm the source of the problem and warning or corrective action taken.

### Summary of the Invention

Aspects of the invention are directed to detecting active ransomware in a computer system. Ransomware is defined herein as malicious software that interferes with, or obstructs, the user interface with the operating system to such an extent that the computer system is made to appear to the user as being unresponsive to user input. Such malware may also attempt to extort funds from the user (i.e., "seek a ransom"), though this latter feature is not a requirement for a piece of malware to be considered ransomware within the present context.

One aspect is directed to a method for detecting malware in a computer system comprising computing hardware that includes a processor and data store, a user input device and a display device. The computer system also includes an operating system executable on the computing hardware, the operating system including a user interface module interfaced with the user input device and the display device. In the method, a current user behavior pattern is monitored based on user input via the user input device. The user behavior is compared against a reference set of behavior patterns associated with user frustration with non-responsiveness of the user interface module. This reference set of behavior patterns may be stored in a dynamically-updatable database according to some embodiments. A current status pattern of the operating system is monitored. Monitoring of the status pattern may be as simple as reading certain indicia of the operating system's state, such as a configuration of open windows and handling of input device data, for example. The current status pattern is compared against a reference set of operating system status patterns associated with predefined ransomware behavior including a pattern indicative of restriction of cursor operation and/or a pattern indicative of restriction of graphical user interface control elements. In response to a result of the comparing of the current user behavior pattern against the reference set of behavior patterns being indicative of current user frustration with non-responsiveness of the user interface module, and further in response to a result of the comparing of the current status pattern against the reference set of operating system status patterns being indicative of the current status pattern having a correlation to the predefined ransomware behavior, an indication of a positive detection of ransomware executing on the computer system is provided.

Embodiments of the method may further take remedial actions such as identifying which process is associated with the ransomware, and disabling, or removing, the ransomware to restore normal operability of the computer system for the user.

In another aspect of the invention, a system for detecting ransomware is a computer-based system that includes computing hardware (i.e., including a processor and data store, a user input device and a display device), and is implemented in a computer system that has an operating system executable on the computing hardware and comprising instructions stored in a non-transitory storage medium that, when executed, implement a user interface module that operationally communicates with the user input device and the display device.

The system includes a user input monitoring module, an input data analysis module, an operating system status analysis module, and a decision module, each of which is executable on the computing hardware and comprising instructions stored in a non-transitory storage medium. When executed, the user input monitoring module causes the computing hardware to collect a current user behavior pattern based on user input via the user input device. The input data analysis module, when executed, causes the computing hardware to compare the user behavior against a reference set of behavior patterns associated with user frustration with non-responsiveness of the user interface module. The operating system status analysis module, when executed, causes the computing hardware to compare a current status pattern of the operating system against a reference set of operating system status patterns associated with predefined ransomware behavior including a pattern indicative of restriction of cursor operation and/or a pattern indicative of restriction of graphical user interface control elements.

The decision module, when executed, causes the computing hardware to provide an indication of a positive detection of ransomware executing on the computer system in response to an output of the input data analysis module being indicative of current user frustration with non-responsiveness of the user interface module, and further in response to an output of the operating system status analysis module being indicative of the current status pattern having a correlation to the predefined ransomware behavior.

### Brief Description of the Drawings

The invention may be more completely understood in consideration of the following detailed description of various embodiments of the invention in connection with the accompanying drawings, in which:
FIG. 1 illustrates an example of ransomware displaying a message on a computer screen with instructions for unlocking the operating system by completing a transfer of funds.
FIG. 2A is a block diagram illustrating a system architecture according to one embodiment of the invention.
FIG. 2B is a block diagram illustrating interactions during operation of a user behavior analysis module according to an embodiment of the invention.
FIG. 2C is a diagram illustrating a system architecture according to another embodiment of the invention.
FIG. 3 is a flow diagram illustrating a process for detecting a ransomware program according to one embodiment of the invention.
FIG. 4 is a block diagram depicting a general-purpose computer system with which aspects of the invention may be realized according to certain embodiments.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the invention as defined by the appended claims.

### Detailed Description

Ransomware programs can be spread through sites offering free software, file sharing sites and hacked legitimate web resources. Often, users download and run malicious programs voluntarily, believing that they are installing legitimate software.

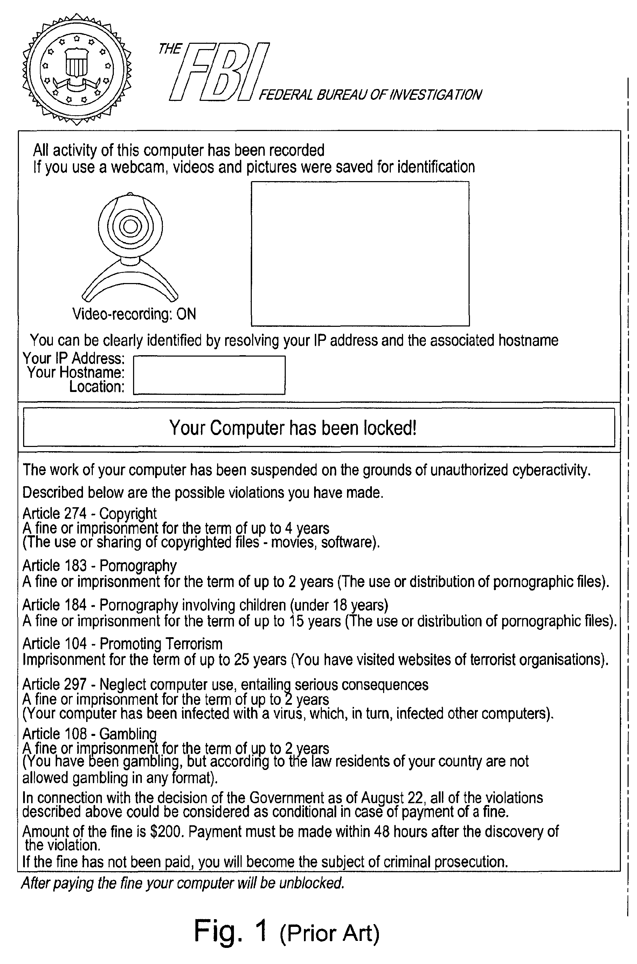

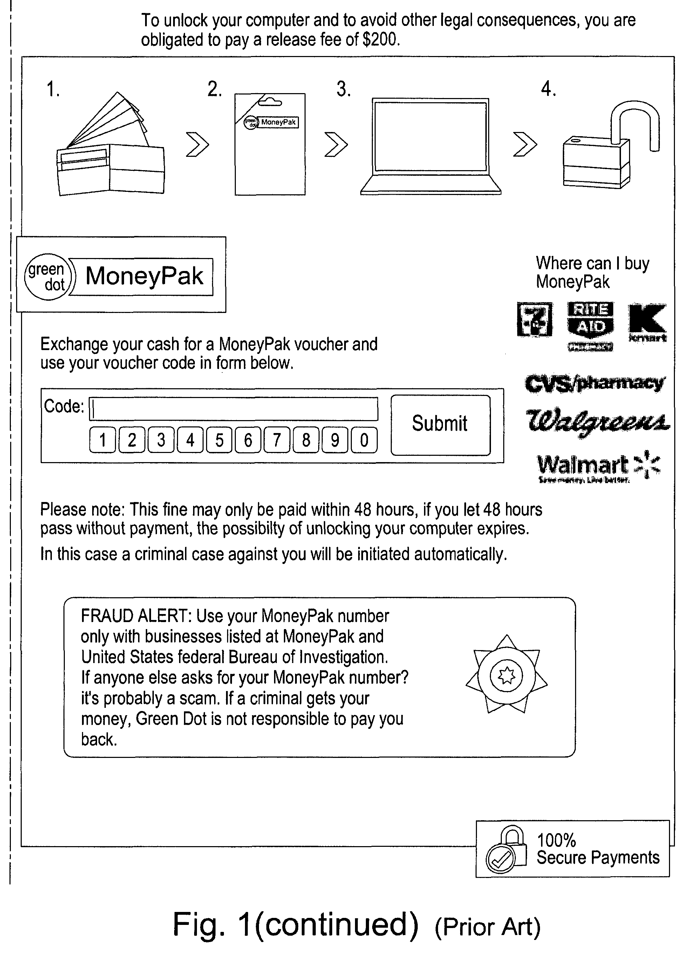

An example of a sequence of typical actions taken by a malicious ransomware program is as follows:
1. Once admitted into the system and run, the malicious program, in order to establish itself in the system, creates a file and writes it into the operating system's autorun.
2. Usually, the malicious program disables the operating system's task manager and the possibility of booting the system in the safe mode. This is done in order to complicate the user's resistance against the ransomware program, which blocks the user's interaction with the operating system.
3. This is followed by the actual mission of the ransomware program. The malicious program blocks the user's interaction with the operating system, displaying, typically over all windows, a window with a message that the computer is locked, and a purported instruction for unlocking it. In the instruction, the offenders, under various pretexts, demand that the user pays for the unlocking codes, and tell the user how he or she will receive the codes to be able to unlock the computer after the payment. A typical example of a window displaying a pretext for locking the computer system, along with instructions is illustrated in FIG. 1.

Lately, authors of ransomware programs sometimes don't even include the unlocking function in the logic of the malicious program's operation. Moreover, this function may no longer be provided in updated versions of the malicious programs which used to "faithfully" allow the user to unlock the computer.

The reasons for this trend are simple. First, it is quite cumbersome for the authors of malicious programs to work with unlocking codes: this requires entering new codes in new versions of malicious programs and constantly monitoring the telephone number match database and the unlocking code database. It is much easier to compile new versions of malicious programs without taking care of the codes, but simply changing mobile phone/account numbers to receive money.

Second, the use of unlocking codes forces the offenders to utilize only such payment methods that allow to send replies to users (generally, this scheme uses premium-type mobile numbers). Without being tied to an unlocking code, offenders can exploit any convenient methods for receiving money.

Finally, the absence of an unlocking code significantly complicates life for the antivirus companies. Previously, companies used to add the unlocking codes found in malicious programs to special unlocking services of known ransomware programs, such as Kaspersky Deblocker. Such services provide users with unlocking codes matching the telephone/account numbers used by offenders and with instructions for curing the operating system. Today, if the ransomware programs do not contain unlocking codes, antivirus companies fight them with special utilities, such as Kaspersky Windows Unlocker. This utility works separately from the infected operating system and is therefore able to eliminate the consequences of the infection, removing files and system registry keys created by the malicious program.

It is clear that if antivirus security modules do not detect a ransom ware program, infection of the operating system will result in blockage of the user's interaction with the operating system, and, consequently, the impossibility to access antivirus product modules from the user's side. Therefore, at present, in order to remove the blockage, the user inevitably must utilize special services through an outside computer system.

Embodiments of the invention allow the computer system to handle situations where the user's interaction with the operating system is locked by ransomware programs, without using outside utilities or resources, but by identifying situations involving violations in the user's interaction with the operating system's interface.

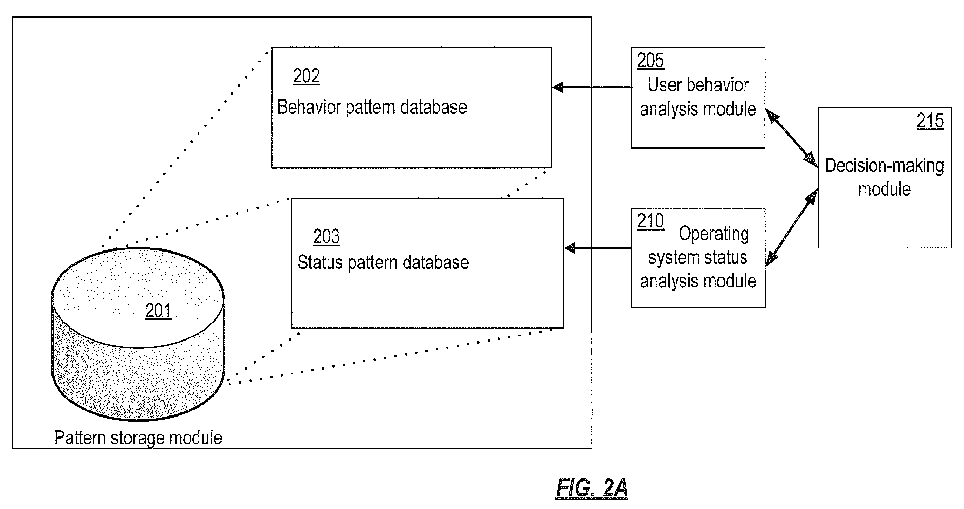

FIG. 2A illustrates an exemplary system architecture of one of the embodiments. The system for detecting active ransomware programs in the operating system includes four modules: a pattern storage module 201, a user behavior analysis module 205, an operating system status analysis module 210 and a decision-making module 215.

The term *module* as used herein means a real-world device, component, or arrangement of components implemented using hardware, such as by an application specific integrated circuit (ASIC) or field-programmable gate array (FPGA), for example, or as a combination of hardware and software, such as by a microprocessor system and a set of program instructions stored in memory that adapt, when executed by the microprocessor, the module to implement the particular functionality, which (while being executed) transform the microprocessor system into a special-purpose device. A module can also be implemented as a combination of the two, with certain functions facilitated by hardware alone, and other functions facilitated by a combination of hardware and software. In certain implementations, at least a portion, and in some cases, all, of a module can be executed on the processor(s) of one or more computers that execute an operating system, system programs, and application programs, while also implementing the module using multitasking, multithreading, distributed (e.g., cloud) processing where appropriate, or other such techniques. Accordingly, each module can be realized in a variety of suitable configurations, and should generally not be limited to any particular implementation exemplified herein, unless such limitations are expressly called out.

The pattern storage module 201 contains at least two updatable databases - a behavior pattern database 202, which stores information identifying possible user behavior scenarios in case of interrupted communication between the user and the operating system interface; and a status pattern database 203, which stores instructions on how the operating system handles an active ransomware program. The user behavior analysis module 205 is configured to discover such signs in the user's behavior which are typical for certain situations - for example, related to violations or abnormalities in the user's interaction with the operating system interface. During operation, the user behavior analysis module 205 interacts with the pattern storage module 201 to look up known behavior patterns stored in the updatable behavior pattern database 202. The operating system status analysis module 210 compares the current operating system status with the status patterns from the status pattern database 203, characterizing how the operating system handles an active ransomware program. Based on the results of the operation of these two modules, the user behavior analysis module 205 and the operating system status analysis module 210, the decision-making module 215 generates a determination as to whether an active ransomware program is present in the operating system.

The operating system status can only indicate that a ransomware program is active in the operating system, obstructing interaction with the operating system user interface, without stating specifically what application represents that ransomware program. The following are examples of characteristics included in the status patterns from the status pattern database 203, indicating that the operating system has an active ransomware program:
- restriction of the cursor operation area; or
- disabling one or more control elements, such as the Start button, the task manager, etc.

In one type of embodiment, the operating system status analysis module 210 performs a non-primary role (i.e., a support role) for determining the presence of a ransomware program in the operating system. In one such embodiment, the operating system status analysis module 210 operates to determine whether or not the operating system is free from a ransomware program. In this embodiment, the operating system status analysis module 210 does not independently discover a presence of a ransomware program in the first instance. Instead, the operating system status analysis module 210 can help to check if the user behavior analysis module may have provided a false positive detection of a ransomware program. Therefore, the decision-making module 215 concludes that an active ransomware program is present in the operating system based on data from two analytical modules - the user behavior analysis module 205, which is checked against the output from the operating system status analysis module 210.

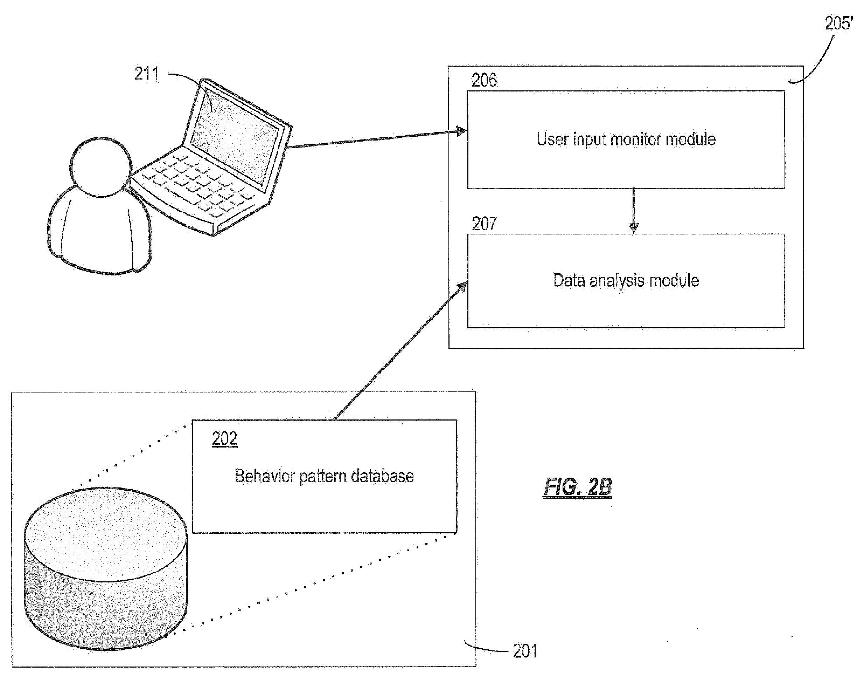

FIG. 2B illustrates an exemplary structure and principle of operation of the user behavior analysis module 205. In this example, the behavior analysis module 205 includes two main modules. The user input monitoring module 206 comprises various data monitoring tools, executed during the user's interaction with the input interfaces. In certain embodiments, at least one of the data monitoring tools is implemented in hardware, which makes those tool(s) more resilient against attacks. Data analysis module 207 analyzes data sequences and interacts with the pattern storage module 201, using known behavior patterns stored in the updatable behavior pattern database 202, which characterize possible user behavior scenarios in case of interruption of the user's interaction with the operating system interface.

In general, operating system user interfaces include user interface modules and devices for user interaction with a computer's operating system or a user application. These include a graphical user interface that facilitates interaction with the operating system using control elements such as icons, menus, interactive windows, etc.), and input devices that facilitate the user's interaction with the computer hardware. Input devices can include, for example, data input devices, such as a keyboard, a mouse or sensor control elements, as well as devices for photo, video and audio data capture, and the like. The user interface module of a computer system implements a set of operating system functions (including device drivers and in some cases, applications) that receive and process user input from the input devices.

The launch of a ransomware program results in interference with the graphical user interface. The user's interaction via the input devices of computer system 211 generates at least the following data, interception of which is read by data monitoring modules 206:
- sequences of symbols entered from a keyboard and temporal relationships between the entered symbols;
- commands and coordinates from pointing control devices such as mice, touchpads, and touchscreens;
- photo, video and audio data; and
- other input data.

From the intercepted data within a certain time window, sequences of data are built and analyzed by the analysis module 207 by comparing them with the behavior patterns from the behavior pattern database 202, characterizing typical user behavior tendencies in response to interruption in the user's interaction with the operating system interface.

The time window for monitoring can be chosen in an interval from a few seconds to several minutes. An alternative to the time window can be, for example, a buffer of a certain size, which builds data sequences for analysis once it is filled. In this case, in one embodiment, the buffer can operate using the FIFO (first in, first out) principle, i.e. when a new pressed key code comes from the keyboard or an event comes from the mouse, the first received data at the beginning of the queue are bumped out by the last data at the end of the queue. In another embodiment, the buffer can be emptied if it does not receive any new data after a period from one second to several minutes.

One example of the description of the user's behavior indicating an interruption in the user's interaction with, for example, a graphic operating system user interface, can be the pressing of a certain combination of preset keys specified in a predefined reference set of behavior pattern indicative of user frustration due to non-responsiveness of the user interface module from the behavior pattern database 202. In a more complex embodiment, an interruption in the user's interaction with the operating system interface can be determined and described in the behavior pattern based on the nature and sequences of the symbols entered by the user - for example, multiple repeated pressing of special key combinations, such as CTRL+ALT+DELETE, ALT+F4, ALT+TAB, CTRL+SHIFT+ESC, etc. Also, the frequency and incoherence of user-pressed keys can indicate the user's panic and/or frustration caused by the blockage of the user's interaction with the operating system. In another embodiment, such signs of user panic can be determined, for example, by analyzing photo/ video/ audio data, by detecting increased vibrations during the user's interaction with the sensor control module, by detecting deviations from the user's usual behavior, or by other such behavioral criteria.

An exemplary architecture of a behavior analysis module 205, shown in FIG. 2B, allows to implement various scenarios for detecting situations related to obstructions in the user's interaction with the operating system's interface. The capabilities of the behavior analysis module 205 are defined only by the set of input interfaces available in a specific computer system 211, which determine what data monitoring modules 206 are used, and, consequently, determine the methods for describing behavior templates from the behavior template database 202, characterizing the possible user behavior scenarios in case of interruption in the user's interaction with the operating system interface.

The above-identified user behavior scenarios can, in the general case, indicate that the user is experiencing difficulties, and, more specifically, indicate an interruption in the user's interaction with the operating system interface. In certain embodiments, only in combination with a positive verdict from the operating system status analysis module 210, will the presence of such behavior patterns lead the decision-making module 215 to conclude that an active ransomware program is present in the operating system.

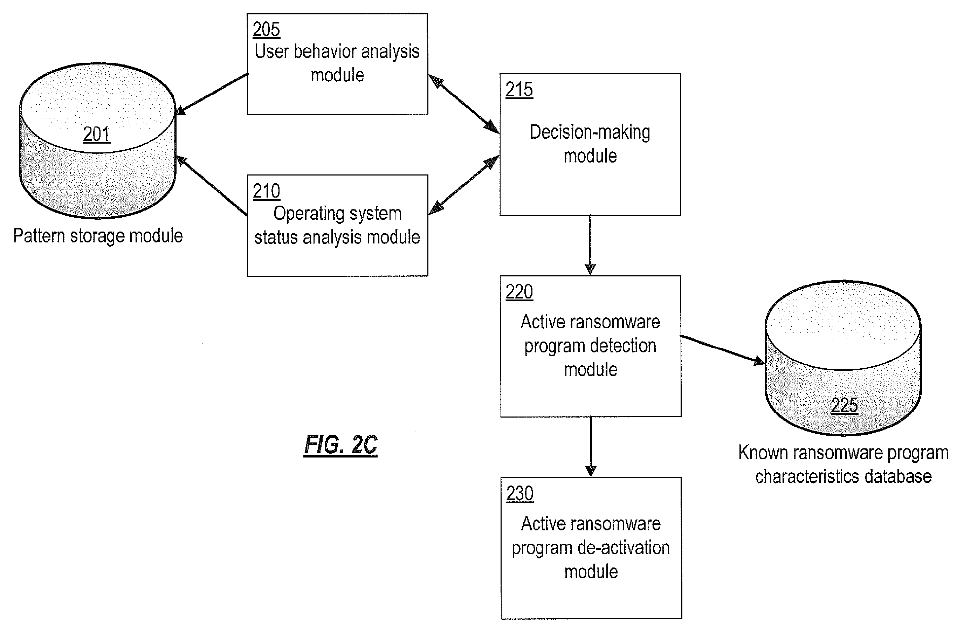

In a related embodiment of this invention, the system for detection of active ransomware programs in the operating system shown in FIG. 2C additionally includes an active ransomware program detection module 220 and an active ransomware program de-activation module 230.

The active ransomware program detection module 220 compares the sets of characteristics of active processes with the known ransomware program characteristics database 225. Such characteristics can include characteristics of windows and behavior of applications, for example:
- a full-screen window or a window larger than the screen resolution;
- a window with no system window menu (SYSMENU, such buttons as MINIMIZE, MAXIMIZE, etc.) or a CHILD, POPUP window;
- a window with a set TOPMOST flag (window over all other windows) or a TOP flag (a milder condition);
- a window which constantly changes its Z-ORDER parameter to TOP or TOPMOST;
- installed hooks (software handlers of intercepted input) for the keyboard or mouse without further transfer of control (a stringent condition) or simply hooks for the keyboard and mouse (a mild condition);
- an application launching itself in case of deletion from memory, i.e. 2 processes are run from a single executable file, each process tracking the presence of the other one in the memory, etc.

In case of detection of active processes whose characteristics match characteristics of known ransomware programs from the known ransomware program characteristics database 225, the active ransomware program de-activation module 230 performs their forced stoppage.

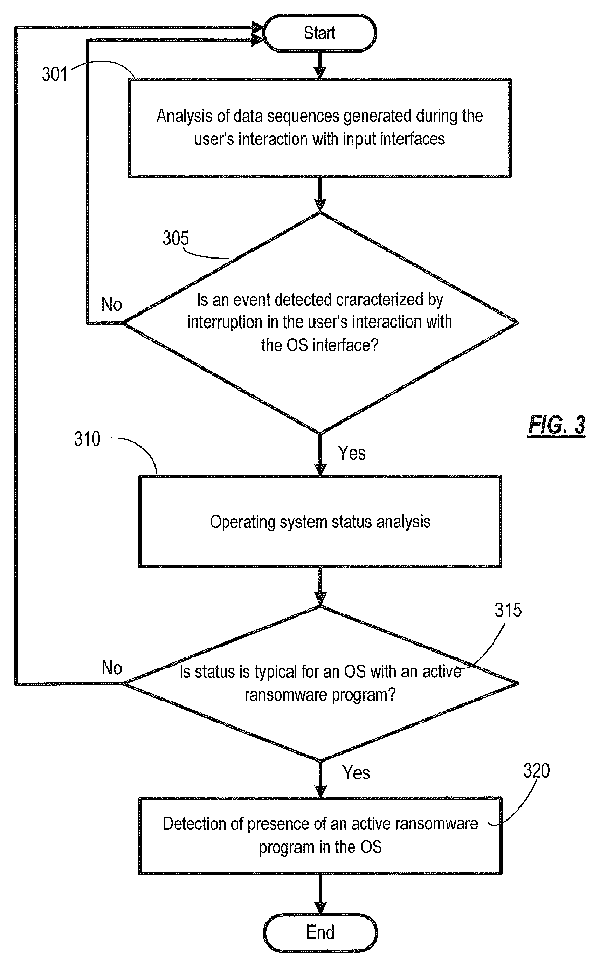

FIG. 3 illustrates an exemplary process for detecting an active ransomware program in the operating system. Pursuant to this method, block 301 analyzes the data sequences built during the user's interaction with input interfaces, after which block 305 generates a conclusion on the detection of an event characterized by an interruption in the user's interaction with the operating system interface. If no such event is detected, the process loops back to the first block 301. If such event is detected, the process proceeds to block 310, which analyzes the operating system status. If the analysis 310 at block 315 does not detect a status typical for an operating system with an active ransomware program, the method loops back to 301. The presence of an active ransomware program in the operating system at is detected at block 320 only in case of two positive verdicts, when, at block 305, there is an interruption in the user's interaction with the operating system interface, and, additionally, block 315 detects a state of the operating system characterized by the presence of an active ransomware program. It will be appreciated that, in an alternative embodiment, the step 310 of analyzing the status of the operating system and the subsequent decision step 315 can be performed prior to the step 301 of analyzing data sequences generated during the user's interaction with input interface and before the associated decision step 305.

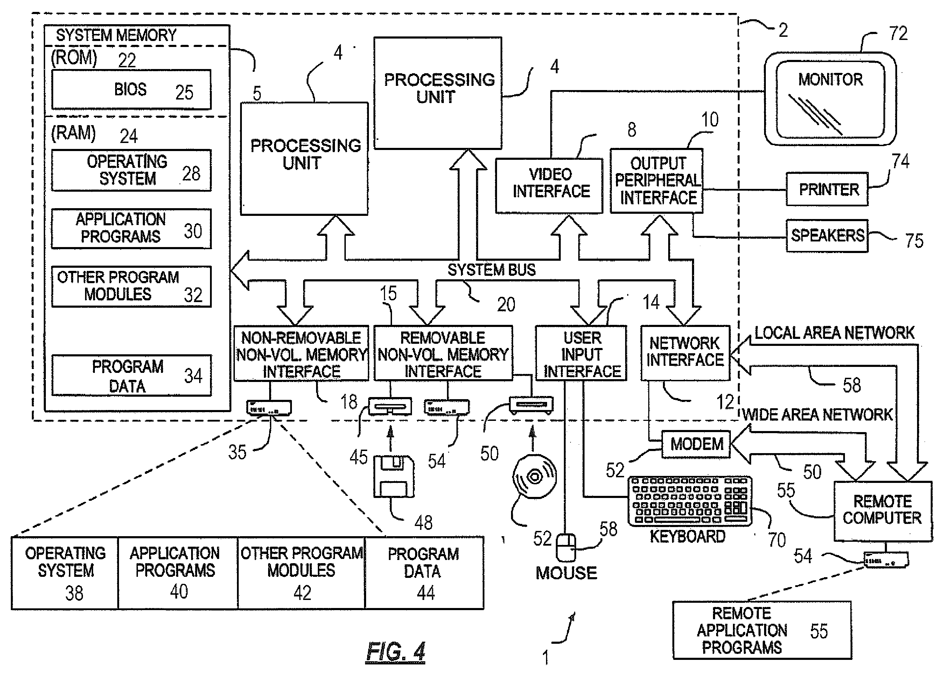

FIG. 4 is a block diagram illustrating in greater detail a computer system 1 on which aspects of the invention as described herein may be implemented according to various embodiments. The computer system 1 may include a computing device such as a personal computer 2. The personal computer 2 includes one or more processing units 4, a system memory 6, a video interface 8, an output peripheral interface 10, a network interface 12, a user input interface 14, removable 16 and non-removable 18 memory interfaces and a system bus or high-speed communications channel 20 coupling the various components. In various embodiments, the processing units 4 may have multiple logical cores that are able to process information stored on computer readable media such as the system memory 6 or memory attached to the removable 16 and non-removable 18 memory interfaces 18. The computer 2 system memory 6 may include non-volatile memory such as Read Only Memory (ROM) 22 or volatile memory such as Random Access Memory (RAM) 24. The ROM 22 may include a basic input/output system (BIOS) 26 to help communicate with the other portion of the computer 2. The RAM 24 may store portions of various software applications such as the operating system 28, application programs 30 and other program modules 32. Further, the RAM 24 may store other information such as program or application data 34. In various embodiments, the RAM 24 stores information that requires low-latencies and efficient access, such as programs and data being manipulated or operated on. In various embodiments RAM 24 comprises Double Data Rate (DDR) memory, Error Correcting memory (ECC) or other memory technologies with varying latencies and configurations such as RAMBUS or DDR2 and DDR3. In this way, in various embodiments, the system memory 6 may store the input data store, access credential data store, operating memory data store, instruction set data store, analysis result data store and the operating memory data store. Further, in various embodiments, the processing units 4 may be configured to execute instructions that limit access to the aforementioned data stores by requiring access credential before access to the information is granted.

The removable 16 and non-removable 18 memory interfaces may couple the computer 2 to disk drives 36 such as SSD or rotational disk drives. These disk drives 36 may provide further storage for various software applications such as the operating system 38, application programs 40 and other program modules 42. Further, the disk drives 36 may store other information such as program or application data 44. In various embodiments, the disk drives 36 store information that doesn't require the same low-latencies as in other storage mediums. Further, the operating system 38, application program 40 data, program modules 42 and program or application data 44 may be the same information as that stored in the RAM 24 in various embodiments mentioned above or it may be different data potentially derivative of the RAM 24 stored data.

Further, the removable non-volatile memory interface 16 may couple the computer 2 to magnetic portable disk drives 46 that utilize magnetic media such as the floppy disk 48, Iomega® Zip or Jazz, or optical disk drives 50 that utilize optical media 52 for storage of computer readable media such as Blu-Ray®, DVD-R/RW, CD-R/RW and other similar formats. Still other embodiments utilize SSD or rotational disks housed in portable enclosures to increase the capacity of removable memory.

The computer 2 may utilize the network interface 12 to communicate with one or more remote computers 56 over a local area network (LAN) 58 or a wide area network (WAN) 60. The network interface 12 may utilize a Network Interface Card (NIC) or other interface such as a modem 62 to enable communication. The modem 62 may enable communication over telephone lines, coaxial, fiber optic, powerline, or wirelessly. The remote computer 56 may contain a similar hardware and software configuration or may have a memory 64 that contains remote application programs 66 that may provide additional computer readable instructions to the computer 2. In various embodiments, the remote computer memory 64 can be utilized to store information such as identified file information that may be later downloaded to local system memory 6. Further, in various embodiments the remote computer 56 may be an application server, an administrative server, client computers, or a network appliance.

A user may enter information to the computer 2 using input devices connected to the user input interface 14 such as a mouse 68 and keyboard 70. Additionally, the input device may be a trackpad, fingerprint scanner, joystick, barcode scanner, media scanner or the like. The video interface 8 may provide visual information to a display such as a monitor 72. The video interface 8 may be an embedded interface or it may be a discrete interface. Further, the computer may utilize a plurality of video interfaces 8, network interfaces 12 and removable 16 and non-removable 18 interfaces in order to increase the flexibility in operation of the computer 2. Further, various embodiments utilize several monitors 72 and several video interfaces 8 to vary the performance and capabilities of the computer 2. Other computer interfaces may be included in computer 2 such as the output peripheral interface 10. This interface may be coupled to a printer 74 or speakers 76 or other peripherals to provide additional functionality to the computer 2.

Various alternative configurations and implementations of the computer are contemplated. These variations may include, without limitation, additional interfaces coupled to the system bus 20 such as universal serial bus (USB), printer port, game port, PCI bus, PCI Express or integrations of the various components described above into chipset components such as the northbridge or southbridge. For example, in various embodiments, the processing unit 4 may include an embedded memory controller (not shown) to enable more efficient transfer of data from the system memory 6 than the system bus 20 may provide.

It should be noted that aspects of the invention may be implemented using a computer system that is a subset of the general-purpose computer system described above. For instance, the computer system may be a blade server having a relatively limited set of input/output facilities. The computer system may also be implemented as an embedded system operating on a microcontroller digital signal processor, application-specific integrated circuit, field programmable gate array, or the like, provided that the system includes sufficient input/output facilities to enable it to interface with a subject computer system being managed or with other computing devices.

The embodiments above are intended to be illustrative and not limiting. Additional embodiments are within the claims. In addition, although aspects of the present invention have been described with reference to particular embodiments, those skilled in the art will recognize that changes can be made in form and detail without departing from the scope of the invention, as defined by the claims.

Persons of ordinary skill in the relevant arts will recognize that the invention may comprise fewer features than illustrated in any individual embodiment described above. The embodiments described herein are not meant to be an exhaustive presentation of the ways in which the various features of the invention may be combined. Accordingly, the embodiments are not mutually exclusive combinations of features; rather, the invention may comprise a combination of different individual features selected from different individual embodiments, as understood by persons of ordinary skill in the art.

## Claims

1. A method for detecting ransomware in a computer system (2) comprising computing hardware that includes a processor and data store (201), a user input device (52, 58) and a display device (72), and an operating system (28) executable on the computing hardware, the operating system (28) including a user interface module (14) interfaced with the user input device (52, 58) and the display device (72), the method comprising:
monitoring (301) a current user behavior pattern based on user input via the user input device (52, 58);
comparing (305) the user behavior against a reference set (202) of behavior patterns associated with user frustration with non-responsiveness of the user interface module (14);
monitoring (310) a current status pattern of the operating system (28);
comparing (315) the current status pattern against a reference set (203) of operating system status patterns associated with predefined ransomware behavior including a pattern indicative of restriction of cursor operation and/or a pattern indicative of restriction of graphical user interface control elements;
in response to a result of the comparing (305) of the current user behavior pattern against the reference set (202) of behavior patterns being indicative of current user frustration with non-responsiveness of the user interface module, and further in response to a result of the comparing (315) of the current status pattern against the reference set (203) of operating system status patterns being indicative of the current status pattern having a correlation to the predefined ransomware behavior, providing an indication of a positive detection of ransomware executing on the computer system (2).

2. The method of claim 1, wherein the monitoring (301) of the current user behavior pattern and the monitoring (310) of the current status pattern of the operating system are performed concurrently during each of a plurality of time windows.

3. The method of any preceding claim, wherein the monitoring (301) of the current user behavior pattern includes storing of input data in a buffer, wherein a full buffer is indicative of a gathered pattern to be compared.

4. The method of any preceding claim, wherein the comparing (315) the current status pattern against a reference set (203) of operating system status patterns is initiated in response to the result of the comparing (305) of the current user behavior against the reference set (202) of behavior patterns being indicative of current user frustration with non-responsiveness of the user interface module (14).

5. The method of any preceding claim, wherein comparing (305) the current user behavior against the reference set (202) of behavior patterns includes comparing the current user behavior against at least one predefined sequence of pointing device movements.

6. The method of any preceding claim, wherein comparing (305) the current user behavior against the reference set (202) of behavior patterns includes comparing the current user behavior against at least one predefined pattern of audio data, video data, or any combination thereof.

7. A system for detecting ransomware, the system comprising:
computing hardware including a processor and data store (201), a user input device (52, 58) and a display device (72);
an operating system (28) executable on the computing hardware and comprising instructions stored in a non-transitory storage medium that, when executed, implement a user interface module that operationally communicates with the user input device (52, 58) and the display device (72);
a user input monitoring module (206) executable on the computing hardware and comprising instructions stored in a non-transitory storage medium that, when executed, cause the computing hardware to collect a current user behavior pattern based on user input via the user input device (52, 58);
an input data analysis module (205) executable on the computing hardware and comprising instructions stored in a non-transitory storage medium that, when executed, cause the computing hardware to compare the user behavior against a reference set (202) of behavior patterns associated with user frustration with non-responsiveness of the user interface module (14);
an operating system status analysis module (210) executable on the computing hardware and comprising instructions stored in a non-transitory storage medium that, when executed, cause the computing hardware to compare a current status pattern of the operating system (28) against a reference set (203) of operating system status patterns associated with predefined ransomware behavior including a pattern indicative of restriction of cursor operation and/or a pattern indicative of restriction of graphical user interface control elements;
a decision module (215) executable on the computing hardware and comprising instructions stored in a non-transitory storage medium that, when executed, cause the computing hardware to provide an indication of a positive detection of ransomware executing on the computer system in response to an output of the input data analysis (205) module being indicative of current user frustration with non-responsiveness of the user interface module, and further in response to an output of the operating system status analysis module (210) being indicative of the current status pattern having a correlation to the predefined ransomware behavior.

8. The system of claim 7, wherein the current user behavior pattern and the current status pattern of the operating system are collected concurrently during each of a plurality of time windows.

9. The system of any one of claims 7-8, wherein the operating system status analysis module (210) is configured to compare the current status pattern against a reference set (203) of operating system status patterns in response to the output of the input data analysis module (205) being indicative of current user frustration with non-responsiveness of the user interface module (14).

10. The system of any one of claims 7-9, wherein the input data analysis module (205) is configured to compare the current user behavior against at least one predefined sequence of pointing device movements.

11. The system of any one of claims 7-10, wherein the input data analysis module (205) is configured to compare the current user behavior against at least one predefined pattern of audio data, video data, or any combination thereof.

## Patentansprüche

1. Verfahren zum Erkennen von Ransomware in einem Computersystem (2), das Rechenhardware umfasst, die einen Prozessor und Datenspeicher (201), ein Benutzereingabegerät (52, 58) und ein Anzeigegerät (72) sowie ein auf der Rechenhardware ablauffähiges Betriebssystem (28) beinhaltet, wobei das Betriebssystem (28) ein Benutzerschnittstellenmodul (14) aufweist, das mit dem Benutzereingabegerät (52, 58) und dem Anzeigegerät (72) verbunden ist, wobei das Verfahren Folgendes beinhaltet:
Überwachen (301) eines aktuellen Benutzerverhaltensmusters auf der Basis von Benutzereingaben über das Benutzereingabegerät (52, 58);
Vergleichen (305) des Benutzerverhaltens mit einem Referenzsatz (202) von Verhaltensmustern, die mit Benutzerfrustration mit einer Nicht-Ansprechung des Benutzerschnittstellenmoduls (14) assoziiert sind;
Überwachen (310) eines aktuellen Statusmusters des Betriebssystems (28);
Vergleichen (315) des aktuellen Statusmusters mit einem Referenzsatz (203) von Betriebssystemstatusmustern, die mit vordefiniertem Ransomware-Verhalten assoziiert sind, einschließlich eines Musters, das eine Cursor-Betriebsbeschränkung anzeigt, und/oder eines Musters, das eine Beschränkung von Bedienelementen der grafischen Benutzerschnittstelle anzeigt;
Bereitstellen, als Reaktion auf ein Ergebnis des Vergleichs (305) des aktuellen Benutzerverhaltensmusters mit dem Referenzsatz (202) von Verhaltensmustern, der aktuelle Benutzerfrustration mit einer Nicht-Ansprechung des Benutzerschnittstellenmoduls anzeigt, und ferner als Reaktion auf ein Ergebnis des Vergleichs (315) des aktuellen Statusmusters mit dem Referenzsatz (203) von Betriebssystemstatusmustern, der anzeigt, dass das aktuelle Statusmuster eine Korrelation mit dem vordefinierten Ransomware-Verhalten hat, einer Anzeige einer positiven Erkennung von auf dem Computersystem (2) ablaufender Ransomware.

2. Verfahren nach Anspruch 1, wobei das Überwachen (301) des aktuellen Benutzerverhaltensmusters und das Überwachen (310) des aktuellen Statusmusters des Betriebssystems gleichzeitig in jedem von mehreren Zeitfenstern erfolgen.

3. Verfahren nach einem der vorherigen Ansprüche, wobei das Überwachen (301) des aktuellen Benutzerverhaltensmusters das Speichern von Eingabedaten in einem Puffer beinhaltet, wobei ein voller Puffer ein zu vergleichendes gesammeltes Muster anzeigt.

4. Verfahren nach einem der vorherigen Ansprüche, wobei das Vergleichen (315) des aktuellen Statusmusters mit einem Referenzsatz (203) von Betriebssystemstatusmustern als Reaktion darauf eingeleitet wird, dass das Ergebnis des Vergleichs (305) des aktuellen Benutzerverhaltens mit dem Referenzsatz (202) von Verhaltensmustern aktuelle Benutzerfrustration mit einer Nicht-Ansprechung des Benutzerschnittstellenmoduls (14) anzeigt.

5. Verfahren nach einem der vorherigen Ansprüche, wobei das Vergleichen (305) des aktuellen Benutzerverhaltens mit dem Referenzsatz (202) von Verhaltensmustern das Vergleichen des aktuellen Benutzerverhaltens mit wenigstens einer vordefinierten Folge von Zeigegerätbewegungen beinhaltet.

6. Verfahren nach einem der vorherigen Ansprüche, wobei das Vergleichen (305) des aktuellen Benutzerverhaltens mit dem Referenzsatz (202) von Verhaltensmustern das Vergleichen des aktuellen Benutzerverhaltens mit wenigstens einem vordefinierten Muster von Audiodaten, Videodaten oder einer Kombination davon beinhaltet.

7. System zum Erkennen von Ransomware, wobei das System Folgendes umfasst:
Rechenhardware mit einem Prozessor und Datenspeicher (201), einem Benutzereingabegerät (52, 58) und einem Anzeigegerät (72);
ein Betriebssystem (28), das auf der Rechenhardware ablaufen kann und in einem nichtflüchtigen Speichermedium gespeicherte Befehle umfasst, die bei Ausführung ein Benutzerschnittstellenmodul implementieren, das operativ mit dem Benutzereingabegerät (52, 58) und dem Anzeigegerät (72) kommuniziert;
ein Benutzereingabeüberwachungsmodul (206), das auf der Rechenhardware ablaufen kann und in einem nichtflüchtigen Speichermedium gespeicherte Befehle umfasst, die bei Ausführung bewirken, dass die Rechenhardware ein aktuelles Benutzerverhaltensmuster auf der Basis einer Benutzereingabe über das Benutzereingabegerät (52, 58) sammelt;
ein Eingabedatenanalysemodul (205), das auf der Rechenhardware ablaufen kann und in einem nichtflüchtigen Speichermedium gespeicherte Befehle umfasst, die bei Abarbeitung bewirken, dass die Rechenhardware das Benutzerverhalten mit einem Referenzsatz (202) von Verhaltensmustern vergleicht, die mit Benutzerfrustration mit einer Nicht-Ansprechung des Benutzerschnittstellenmoduls (14) assoziiert sind;
ein Betriebssystemstatus-Analysemodul (210), das auf der Rechenhardware ablaufen kann und in einem nichtflüchtigen Speichermedium gespeicherte Befehle umfasst, die bei Ausführung bewirken, dass die Rechenhardware ein aktuelles Statusmuster des Betriebssystems (28) mit einem Referenzsatz (203) von Betriebssystemstatusmustern vergleicht, die mit vordefiniertem Ransomware-Verhalten assoziiert sind, einschließlich eines Musters, das eine Beschränkung des Cursor-Betriebs anzeigt, und/oder eines Musters, das eine Beschränkung von Bedienelementen der grafischen Benutzerschnittstelle anzeigt;
ein Entscheidungsmodul (215), das auf der Rechenhardware ablaufen kann und in einem nichtflüchtigen Speichermedium gespeicherte Befehle umfasst, die bei Ausführung bewirken, dass die Rechenhardware eine Anzeige einer positiven Erkennung von Ransomware bereitstellt, die auf dem Computersystem abläuft, als Reaktion darauf, dass ein Ausgang des Eingabedatenanalysemoduls (205) aktuelle Benutzerfrustration mit einer Nicht-Ansprechung des Benutzerschnittstellenmoduls anzeigt, und ferner als Reaktion darauf, dass ein Ausgang des Betriebssystemstatusanalysemoduls (210) anzeigt, dass das aktuelle Statusmuster eine Korrelation mit dem vordefinierten Ransomware-Verhalten hat.

8. System nach Anspruch 7, wobei das aktuelle Benutzerverhaltensmuster und das aktuelle Statusmuster des Betriebssystems gleichzeitig in jedem aus einer Mehrzahl von Zeitfenstern gesammelt werden.

9. System nach einem der Ansprüche 7-8, wobei das Betriebssystemstatus-Analysemodul (210) so konfiguriert ist, dass es das aktuelle Statusmuster mit einem Referenzsatz (203) von Betriebssystemstatusmustern als Reaktion darauf vergleicht, dass der Ausgang des Eingabedatenanalysemoduls (205) aktuelle Benutzerfrustration mit einer Nicht-Ansprechung des Benutzerschnittstellenmoduls (14) anzeigt.

10. System nach einem der Ansprüche 7-9, wobei das Eingabedatenanalysemodul (205) zum Vergleichen des aktuellen Benutzerverhaltens mit wenigstens einer vordefinierten Folge von Zeigegerätbewegungen konfiguriert ist.

11. System nach einem der Ansprüche 7-10, wobei das Eingabedatenanalysemodul (205) zum Vergleichen des aktuellen Benutzerverhaltens mit wenigstens einem vordefinierten Muster von Audiodaten, Videodaten oder einer beliebigen Kombination davon konfiguriert ist.

## Revendications

1. Procédé de détection d'un rançongiciel dans un système informatique (2) comprenant un matériel de calcul informatique qui inclut un processeur et mémoire de données (201), un dispositif d'entrée utilisateur (52, 58), un dispositif d'affichage (72), et un système d'exploitation (28) exécutable sur le matériel de calcul informatique, le système d'exploitation (28) incluant un module d'interface utilisateur (14) interfacé avec le dispositif d'entrée utilisateur (52, 58) et le dispositif d'affichage (72), le procédé comprenant les étapes ci-dessous consistant à :
surveiller (301) un modèle de comportement d'utilisateur en cours sur la base d'une entrée d'utilisateur par l'intermédiaire du dispositif d'entrée utilisateur (52, 58) ;
comparer (305) le comportement d'utilisateur à un ensemble de référence (202) de modèles de comportement associés à une frustration d'utilisateur en ce qui concerne une absence de réactivité du module d'interface utilisateur (14) ;
surveiller (310) un modèle d'état en cours du système d'exploitation (28) ;
comparer (315) le modèle d'état en cours à un ensemble de référence (203) de modèles d'état de système d'exploitation associés à un comportement de rançongiciel prédéfini incluant un modèle indicatif d'une restriction d'opération de curseur et/ou un modèle indicatif d'une restriction d'éléments de commande d'interface utilisateur graphique ;
en réponse au fait qu'un résultat de l'étape de comparaison (305) du modèle de comportement d'utilisateur en cours à l'ensemble de référence (202) de modèles de comportement est indicatif d'une frustration d'utilisateur en cours en ce qui concerne une absence de réactivité du module d'interface utilisateur, et en outre en réponse au fait qu'un résultat de l'étape de comparaison (315) du modèle d'état en cours à l'ensemble de référence (203) de modèles d'état de système d'exploitation est indicatif du modèle d'état en cours présentant une corrélation avec le comportement de rançongiciel prédéfini, fournir une indication d'une détection positive de rançongiciel s'exécutant sur le système informatique (2).

2. Procédé selon la revendication 1, dans lequel l'étape de surveillance (301) du modèle de comportement d'utilisateur en cours et l'étape de surveillance (310) du modèle d'état en cours du système d'exploitation sont mises en oeuvre simultanément au cours de chacune d'une pluralité de fenêtres temporelles.

3. Procédé selon l'une quelconque des revendications précédentes, dans lequel l'étape de surveillance (301) du modèle de comportement d'utilisateur en cours comprend l'étape consistant à stocker des données d'entrée dans une mémoire tampon, dans lequel une mémoire tampon pleine est indicative d'un modèle regroupé à comparer.

4. Procédé selon l'une quelconque des revendications précédentes, dans lequel l'étape de comparaison (315) du modèle d'état en cours à un ensemble de référence (203) de modèles d'état de système d'exploitation est initiée en réponse au fait que le résultat de la comparaison (305) du comportement d'utilisateur en cours à l'ensemble de référence (202) de modèles de comportement est indicatif d'une frustration d'utilisateur en cours en ce qui concerne l'absence de réactivité du module d'interface utilisateur (14).

5. Procédé selon l'une quelconque des revendications précédentes, dans lequel l'étape de comparaison (305) du comportement d'utilisateur en cours à l'ensemble de référence (202) de modèles de comportement consiste à comparer le comportement d'utilisateur en cours à au moins une séquence prédéfinie de mouvements de dispositif de pointage.

6. Procédé selon l'une quelconque des revendications précédentes, dans lequel l'étape de comparaison (305) du comportement d'utilisateur en cours à l'ensemble de référence (202) de modèles de comportement consiste à comparer le comportement d'utilisateur en cours à au moins un modèle prédéfini de données audio, de données vidéo, ou de toute combinaison de celles-ci.

7. Système destiné à détecter un rançongiciel, le système comprenant :
un matériel de calcul informatique incluant un processeur et mémoire de données (201), un dispositif d'entrée utilisateur (52, 58) et un dispositif d'affichage (72) ;
un système d'exploitation (28) exécutable sur le matériel de calcul informatique et comprenant des instructions stockées sur un support de stockage non transitoire qui, lorsqu'elles sont exécutées, mettent en oeuvre un module d'interface utilisateur qui communique fonctionnellement avec le dispositif d'entrée utilisateur (52, 58) et le dispositif d'affichage (72) ;
un module de surveillance d'entrée d'utilisateur (206) exécutable sur le matériel de calcul informatique et comprenant des instructions stockées sur un support de stockage non transitoire qui, lorsqu'elles sont exécutées, amènent le matériel de calcul informatique à collecter un modèle de comportement d'utilisateur en cours sur la base d'une entrée d'utilisateur par l'intermédiaire du dispositif d'entrée utilisateur (52, 58) ;
un module d'analyse de données d'entrée (205) exécutable sur le matériel de calcul informatique et comprenant des instructions stockées sur un support de stockage non transitoire qui, lorsqu'elles sont exécutées, amènent le matériel de calcul informatique à comparer le comportement d'utilisateur à un ensemble de référence (202) de modèles de comportement associés à une frustration d'utilisateur en ce qui concerne une absence de réactivité du module d'interface utilisateur (14) ;
un module d'analyse d'état de système d'exploitation (210) exécutable sur le matériel de calcul informatique et comprenant des instructions stockées sur un support de stockage non transitoire qui, lorsqu'elles sont exécutées, amènent le matériel de calcul informatique à comparer un modèle d'état en cours du système d'exploitation (28) à un ensemble de référence (203) de modèles d'état de système d'exploitation associés à un comportement de rançongiciel prédéfini incluant un modèle indicatif d'une restriction d'opération de curseur et/ou un modèle indicatif d'une restriction d'éléments de commande d'interface utilisateur graphique ;
un module de décision (215) exécutable sur le matériel de calcul informatique et comprenant des instructions stockées sur un support de stockage non transitoire qui, lorsqu'elles sont exécutées, amènent le matériel de calcul informatique à fournir une indication d'une détection positive de rançongiciel s'exécutant sur le système informatique, en réponse à une sortie du module d'analyse de données d'entrée (205) indicative d'une frustration d'utilisateur en cours en ce qui concerne une absence de réactivité du module d'interface utilisateur, et en outre en réponse à une sortie du module d'analyse d'état de système d'exploitation (210) indicative du modèle d'état en cours présentant une corrélation avec le comportement de rançongiciel prédéfini.

8. Système selon la revendication 7, dans lequel le modèle de comportement d'utilisateur en cours et le modèle d'état en cours du système d'exploitation sont collectés simultanément au cours de chacune d'une pluralité de fenêtres temporelles.

9. Système selon l'une quelconque des revendications 7 à 8, dans lequel le module d'analyse d'état de système d'exploitation (210) est configuré de manière à comparer le modèle d'état en cours à un ensemble de référence (203) de modèles d'état de système d'exploitation en réponse au fait que la sortie du module d'analyse de données d'entrée (205) est indicative d'une frustration d'utilisateur en cours en ce qui concerne une absence de réactivité du module d'interface utilisateur (14).

10. Système selon l'une quelconque des revendications 7 à 9, dans lequel le module d'analyse de données d'entrée (205) est configuré de manière à comparer le comportement d'utilisateur en cours à au moins une séquence prédéfinie de mouvements de dispositif de pointage.

11. Système selon l'une quelconque des revendications 7 à 10, dans lequel le module d'analyse de données d'entrée (205) est configuré de manière à comparer le comportement d'utilisateur en cours à au moins un modèle prédéfini de données audio, de données vidéo, ou de toute combinaison de celles-ci.
